# EUROPEAN PATENT APPLICATION

(11) **EP 4 644 431 A1**
(43) Date of publication of application: **05.11.2025**
(21) Application number: 24744563.8
(22) Date of filing: 11.01.2024
(51) Int. Cl.: C08F 2/44, C08F 279/02, C08F 291/02, C09J 4/02, C09J 109/00

(54) **COMPOSITION, COMPONENT, AND MOTOR**

(30) Priority: 20.01.2023 JP 2023007241
(71) Applicant: Denka Company Limited, Tokyo 103-8338 (JP)
(72) Inventor: SERIZAWA, Shinya, Tokyo 103-8338 (JP); KURIMURA, Hiroyuki, Tokyo 103-8338 (JP)
(74) Representative: Gulde & Partner
(86) International application number: PCT/JP2024/000412
(87) International publication number: WO 2024/154640

(57) **Abstract**

A composition includes: a polymerizable monomer (A); and an elastomer (B), in which the polymerizable monomer (A) includes a monofunctional (meth)acrylate (A1) and a high-polarity monomer (A2), and in a case where a storage elastic modulus at 155°C, in a case where a cured product obtained by curing the composition at 23°C for 24 hours is measured in a tensile mode at a frequency of 1 Hz, a measurement temperature range of 0°C to 250°C, and a temperature rising rate of 5°C/min using a dynamic viscoelasticity measuring device, is defined as E'₁₅₅, the E'₁₅₅ is 80 MPa or more.

## Description

### TECHNICAL FIELD

The present invention relates to a composition, an article, and a motor.

### BACKGROUND ART

For example, there is an increasing demand for in-vehicle motors for driving wheels of electric vehicles, hybrid vehicles, and the like. An adhesive is used in the motor for fixing a magnet. The adhesive is used for, for example, adhesion between a rotor and a magnet, adhesion between a stator of a motor and a magnet, and the like.

Examples of the technology related to the motor adhesive or the automobile adhesive include those described in Patent Documents 1 to 3.

Patent Document 1 discloses a radically curable resin composition containing (A) a component: a terminal (meth)acrylic group-containing vinyl polymer, (B) a component: a radically polymerizable monomer selected from the group consisting of isobornyl (meth)acrylate, dicyclopentanyl (meth)acrylate, adamantyl (meth)acrylate, acryloylmorpholine, dimethylacrylamide, and diethylacrylamide, (C) a component:
(meth)acrylate or (meth)acrylic acid having a phosphate group, and (D) a component: a radical initiator, in which the radically curable resin composition contains 5 to 140 parts by mass of the (B) component with respect to 100 parts by mass of the (A) component, for the purpose of providing a radically curable resin composition which has excellent adhesive force to a metal member such as a magnet and from which a cured product having no cracks or peeling is obtained even after a cold heat cycle test required for a vehicle-mounted member.

Patent Document 2 describes a composition containing the following (A) to (D) that is intended to be used as an adhesive for manufacturing an automobile.
(A) 40 to 75 parts by mass of urethane (meth)acrylate having a number-average molecular weight of 5,000 or more with respect to 100 parts by mass of a total of (A) and (B)
(B) (meth)acrylic compound containing 15 to 25 parts by mass of (B-1) (meth)acrylate having no urethane bond and (B-2) (meth)acrylic acid with respect to 100 parts by mass of the total of (A) and (B)
(C) Polymerization initiator
(D) Reducing agent

Patent Document 3 describes a two-liquid type adhesive consisting of a first agent containing a free radical initiator and a second agent containing a reducing agent, in order to provide a two-liquid type adhesive having high heat resistance and moisture resistance, which can be used as a structural adhesive. This two-liquid type adhesive contains a first monomer which is methyl methacrylate, and a second monomer selected from the group consisting of a polyfunctional (meth)acrylic acid adduct of methacrylic acid, aromatic polyol, or a derivative thereof, and a combination thereof. The overlap shear strength of the cured product of the two-liquid type adhesive is 20 MPa or more at 25°C and 7 MPa or more at 120°C, the adhesive force according to the T-peel test at 25°C is 2 kN/m or more, and the glass transition temperature is 130°C or higher.

### RELATED DOCUMENT

### PATENT DOCUMENT

Patent Document 1: Japanese Unexamined Patent Publication No. 2017-186439
Patent Document 2: International Publication No. WO2020/100832
Patent Document 3: Japanese Unexamined Patent Publication No. 2016-155892

### SUMMARY OF THE INVENTION

### TECHNICAL PROBLEM

For example, an adhesive used for a motor or the like is required to have heat resistance fatigue properties that can withstand a force in a tensile direction caused by centrifugal force applied in a high temperature environment in order to cope with an increase in temperature of a use environment due to miniaturization and high output of the motor or the like.

The present invention has been made in view of the above circumstances, and provides a composition in which heat resistance fatigue properties are improved, and an article and a motor, which are formed out of the composition.

### SOLUTION TO PROBLEM

The present inventors conducted intensive investigations in order to achieve the above-described object. As a result, it was found that, in a case of a composition including a polymerizable monomer including a monofunctional (meth)acrylate and a high-polarity monomer, and an elastomer, and setting a storage elastic modulus of a cured product of the composition at 155°C to a specific range, the heat resistance fatigue properties of the composition can be improved, thereby completing the present invention.

According to the present invention, the following composition, article, and motor are provided.
[1] A composition including: a polymerizable monomer (A); and an elastomer (B), in which the polymerizable monomer (A) includes a monofunctional (meth)acrylate (A1) and a high-polarity monomer (A2), and in a case where a storage elastic modulus at 155°C, in a case where a cured product obtained by curing the composition at 23°C for 24 hours is measured in a tensile mode at a frequency of 1 Hz, a measurement temperature range of 0°C to 250°C, and a temperature rising rate of 5°C/min using a dynamic viscoelasticity measuring device, is defined as E'₁₅₅, the E'₁₅₅ is 80 MPa or more.
[2] The composition according to [1], in which a breaking elongation of a 1BA type dumbbell test piece according to Appendix A of JIS K 7161-2:2014, which is obtained by curing the composition at 23°C for 24 hours, is 30% or more, the breaking elongation being measured under a condition of 23°C and a tensile rate of 10 mm/min according to JIS K 7161-2:2014.
[3] The composition according to [1] or [2], in which the monofunctional (meth)acrylate (A1) includes a tricyclic monofunctional (meth)acrylate in which three rings are alicyclic.
[4] The composition according to [3], in which the tricyclic monofunctional (meth)acrylate includes one or more selected from the group consisting of a monofunctional (meth)acrylate having a structure including a dicyclopentane skeleton and a ring connected to the dicyclopentane skeleton, and a monofunctional (meth)acrylate having a dicyclopentadiene skeleton.
[5] The composition according to any one of [1] to [4], in which in a case where a total content of the polymerizable monomer (A) and the elastomer (B) is 100 parts by mass, a content of the monofunctional (meth)acrylate (A1) is 1 part by mass or more and 50 parts by mass or less.
[6] The composition according to any one of [1] to [5], in which the polymerizable monomer (A) further includes a polyfunctional (meth)acrylate (A3).
[7] The composition according to [6], in which the polyfunctional (meth)acrylate (A3) includes one or two or more selected from the group consisting of a polyfunctional (meth)acrylate having an alicyclic structure, a polyfunctional (meth)acrylate having an aromatic ring structure, and a polyfunctional (meth)acrylate having an aliphatic chain structure.
[8] The composition according to [6] or [7], in which the polyfunctional (meth)acrylate (A3) includes 2 or more and 6 or less (meth)acryloyl groups.
[9] The composition according to any one of [6] to [8], in which in a case where a total content of the polymerizable monomer (A) and the elastomer (B) is 100 parts by mass, a content of the polyfunctional (meth)acrylate (A3) is 1 part by mass or more and 30 parts by mass or less.
[10] The composition according to any one of [1] to [9], in which the high-polarity monomer (A2) includes (meth)acrylic acid.
[11] The composition according to any one of [1] to [10], in which in a case where a total content of the polymerizable monomer (A) and the elastomer (B) is 100 parts by mass, a content of the high-polarity monomer (A2) is 15 parts by mass or more and 40 parts by mass or less.
[12] The composition according to any one of [1] to [11], in which the elastomer (B) includes one or two or more selected from the group consisting of a (meth)acrylonitrile-butadiene rubber, a methyl (meth)acrylate-butadiene-styrene rubber, and a methyl (meth)acrylate-butadiene-(meth)acrylonitrile-styrene rubber.
[13] The composition according to any one of [1] to [12], in which in a case where a total content of the polymerizable monomer (A) and the elastomer (B) is 100 parts by mass, a content of the elastomer (B) is 20 parts by mass or more and 70 parts by mass or less.
[14] The composition according to any one of [1] to [13], in which in a case where a storage elastic modulus at 23°C, in a case where a cured product obtained by curing the composition at 23°C for 24 hours is measured in a tensile mode at a frequency of 1 Hz, a measurement temperature range of 0°C to 250°C, a temperature rising rate of 5°C/min using a dynamic viscoelasticity measuring device, is defined as E'₂₃, the E'₂₃ is 300 MPa or more.
[15] The composition according to any one of [1] to [14], in which in a case where a storage elastic modulus at 80°C, in a case where a cured product obtained by curing the composition at 23°C for 24 hours is measured in a tensile mode at a frequency of 1 Hz, a measurement temperature range of 0°C to 250°C, a temperature rising rate of 5°C/min using a dynamic viscoelasticity measuring device, is defined as E'₈₀, the E'₈₀ is 150 MPa or more.
[16] The composition according to any one of [1] to [15], in which the composition is an adhesive composition.
[17] The composition according to any one of [1] to [16], in which the composition is used for a motor.
[18] The composition according to [17], in which the composition is used for fixing a magnet and a rotor or a magnet and a stator in the motor.
[19] An article including a cured product formed out of the composition according to any one of [1] to [18].
[20] A motor including a cured product formed out of the composition according to any one of [1] to [18].

### ADVANTAGEOUS EFFECTS OF INVENTION

According to the present invention, it is possible to provide a composition in which heat resistance fatigue properties are improved, and an article and a motor, which are formed out of the composition.

### DESCRIPTION OF EMBODIMENTS

Hereinafter, embodiments of the present invention will be described in detail.

In the present specification, unless otherwise specified, the notation "X to Y" in the description of a numerical range indicates a range of X or more and Y or less. For example, "1% to 5% by mass" means "1% by mass or more and 5% by mass or less".

In the present specification, in a case where the composition is a two-agent type of a first agent and a second agent, the content of each component preferably indicates the content with respect to the total of the first agent and the second agent.

In a case where substitution or non-substitution is not explicitly indicated in the description of a group (atomic group) in the present specification, the group (atomic group) is intended to include both a group (atomic group) having no substituent and a group (atomic group) having a substituent. For example, the concept of an "alkyl group" includes not only an alkyl group not having a substituent (unsubstituted alkyl group) but also an alkyl group having a substituent (substituted alkyl group).

The expression "(meth)acryl" in the present specification represents a concept including both acryl and methacryl. The same applies to similar expressions such as "(meth)acrylate".

Unless otherwise specified, the term "organic group" as used in the present specification means an atomic group obtained by removing one or more hydrogen atoms from an organic compound. For example, a "monovalent organic group" refers to an atomic group obtained by removing one hydrogen atom from any organic compound.

### [Adhesive Composition]

Hereinafter, the "adhesive composition" in the composition of the present embodiment will be described in detail.

The adhesive composition of the present embodiment is an adhesive composition including a polymerizable monomer (A) and an elastomer (B), in which the polymerizable monomer (A) includes a monofunctional (meth)acrylate (A1) and a high-polarity monomer (A2), and in a case where a storage elastic modulus at 155°C in a case where a cured product obtained by curing the composition at 23°C for 24 hours is measured in a tensile mode at a frequency of 1 Hz, a measurement temperature range of 0°C to 250°C, and a temperature rising rate of 5°C/min using a dynamic viscoelasticity measuring device is defined as E'₁₅₅, E'₁₅₅ is 80 MPa or more.

For example, an adhesive used for a motor or the like is required to have heat resistance fatigue properties that can withstand a force in a tensile direction caused by centrifugal force applied in a high temperature environment in order to cope with an increase in temperature of a use environment due to miniaturization and high output of the motor or the like.

The present inventors conducted intensive investigations in order to achieve the above-described object. As a result, it was found that the storage elastic modulus of the cured product of the adhesive composition of the present embodiment at 155°C is effective as a design guideline for improving the heat resistance fatigue properties.

As a result of further diligent studies based on the above findings, the present inventors have found that an adhesive composition in which heat resistance fatigue properties are improved, and an article and a motor, which are formed out of the adhesive composition, can be obtained by controlling a storage elastic modulus of the cured product at 155°C within a specific range.

That is, according to the adhesive composition of the present embodiment, it is possible to realize an article and a motor having improved heat resistance fatigue properties.

Furthermore, the present inventors have found that, according to the adhesive composition of the present embodiment, both the heat resistance fatigue properties and the heat cycle resistance properties can be achieved. That is, according to the adhesive composition of the present embodiment, it is also possible to realize an article and a motor in which the performance balance of the heat resistance fatigue properties and the heat cycle resistance properties is improved.

In the present specification, the heat resistance fatigue properties mean the repeated fatigue properties under a high temperature, and the heat cycle resistance properties mean the adhesive strength after the heat cycle treatment.

It is considered that, by designing the adhesive composition of the present embodiment such that the storage elastic modulus of the cured product at 155°C is in a specific range, deterioration of the cured product, which may lead to a decrease in adhesion strength or breaking strength even in a case where a repeated load is applied at a high temperature, is suppressed, and as a result, an adhesive composition in which the performance balance of the heat resistance fatigue properties and the heat cycle resistance properties is improved can be obtained.

In the adhesive composition of the present embodiment, from the viewpoint of further improving the performance balance of the heat resistance fatigue properties and the heat cycle resistance properties, the storage elastic modulus E'₁₅₅ of the cured product at 155°C is preferably 100 MPa or more, more preferably 110 MPa or more, still more preferably 120 MPa or more, even still more preferably 150 MPa or more, even still more preferably 180 MPa or more, even still more preferably 200 MPa or more, even still more preferably 230 MPa or more, and even still more preferably 250 MPa or more, and is preferably 700 MPa or less, more preferably 600 MPa or less, still more preferably 500 MPa or less, even still more preferably 400 MPa or less, even still more preferably 350 MPa or less, and even still more preferably 320 MPa or less.

The storage elastic modulus E'₁₅₅ of the cured product of the adhesive composition according to the present embodiment at 155°C can be adjusted, for example, by adjusting the type and the content proportion of each component contained in the adhesive composition according to the present embodiment, the mixing order of each component, the mixing method, and the like.

Hereinafter, each component of the adhesive composition according to the present embodiment will be described.

### <Polymerizable Monomer (A)>

The adhesive composition according to the present embodiment contains a polymerizable monomer (A).

The polymerizable monomer (A) includes a monofunctional (meth)acrylate (A1) and a high-polarity monomer (A2). The polymerizable monomer (A) does not include an elastomer (B) described later.

### (Monofunctional (meth)acrylate (A1))

The monofunctional (meth)acrylate (A1) refers to a compound having one (meth)acryloyl group. However, those corresponding to the high-polarity monomer (A2) are excluded from the monofunctional (meth)acrylate (A1).

The monofunctional (meth)acrylate (A1) preferably includes a monomer represented by General Formula (I).

CH₂ = CHR¹ - COO - R² (I)

In General Formula (I), R¹ is a hydrogen atom or a methyl group, and R² is a group including a cyclic hydrocarbon skeleton, preferably a group including a polycyclic cyclic hydrocarbon skeleton. The cyclic hydrocarbon skeleton included in R² is preferably an alicyclic skeleton which does not include an aromatic ring.

The monofunctional (meth)acrylate (A1) preferably includes a tricyclic monofunctional (meth)acrylate in which the three rings are alicyclic (hereinafter, also referred to as "tricyclic monofunctional (meth)acrylate").

The tricycle refers to three connected rings. The tricyclic monofunctional (meth)acrylate of the present embodiment refers to a monofunctional (meth)acrylate having an alicyclic hydrocarbon group having three connected rings. As the alicyclic hydrocarbon group, an unsubstituted saturated hydrocarbon group is preferable.

The tricyclic monofunctional (meth)acrylate preferably includes one or two or more selected from the group consisting of a monofunctional (meth)acrylate having a structure including a dicyclopentane skeleton and one ring connected to the dicyclopentane skeleton, and a monofunctional (meth)acrylate having a dicyclopentadiene skeleton, more preferably includes one or two or more selected from the group consisting of dicyclopentanyl (meth)acrylate, dicyclopentenyloxyethyl (meth)acrylate, and dicyclopentenyl (meth)acrylate, and still more preferably includes dicyclopentanyl (meth)acrylate. Examples of the dicyclopentanyl (meth)acrylate include FA-513M manufactured by Hitachi Chemical Company, Ltd.

In a case where the total content of the polymerizable monomer (A) and the elastomer (B) is set to 100 parts by mass, the content of the monofunctional (meth)acrylate (A1) in the adhesive composition of the present embodiment is preferably 1 part by mass or more, more preferably 3 parts by mass or more, still more preferably 5 parts by mass or more, even still more preferably 8 parts by mass or more, even still more preferably 10 parts by mass or more, even still more preferably 15 parts by mass or more, even still more preferably 18 parts by mass or more, even still more preferably 20 parts by mass or more, and even still more preferably 25 parts by mass or more, and is preferably 50 parts by mass or less, more preferably 40 parts by mass or less, still more preferably 35 parts by mass or less, and even still more preferably 30 parts by mass or less.

The ratio of the tricyclic monofunctional (meth)acrylate in the monofunctional (meth)acrylate (A1) is preferably 50% by mass or more, more preferably 60% by mass or more, still more preferably 70% by mass or more, even still more preferably 75% by mass or more, even still more preferably 80% by mass or more, even still more preferably 85% by mass or more, even still more preferably 90% by mass or more, even still more preferably 95% by mass or more, and preferably 100% by mass or less.

### (High-Polarity Monomer (A2))

The high-polarity monomer (A2) is, for example, a polymerizable monomer having a polar functional group and a carbon-carbon double bond. The high-polarity monomer (A2) may be a monofunctional monomer (monomer having one carbon-carbon double bond) or a polyfunctional monomer (monomer having a plurality of carbon-carbon double bonds), but is preferably a monofunctional monomer.

From the viewpoint of further improving the interaction with a member used in automobile manufacturing, the polar functional group contained in the high-polarity monomer (A2) preferably includes one or two or more selected from the group consisting of a carboxy group, a hydroxy group, and a phosphate group, more preferably includes one or two or more selected from the group consisting of a carboxy group and a phosphate group, and still more preferably includes a carboxy group.

The high-polarity monomer (A2) preferably includes one or two or more selected from the group consisting of (meth)acrylic acid, fumaric acid, maleic acid, fumaric acid anhydride, maleic acid anhydride, a monomer having a phosphate group and a (meth)acryloyl group, and hydroxyalkyl (meth)acrylate, more preferably includes one or two or more selected from the group consisting of (meth)acrylic acid, a monomer having a phosphate group and a (meth)acryloyl group, and still more preferably includes (meth)acrylic acid, and even still more preferably includes methacrylic acid.

In a case where the total content of the polymerizable monomer (A) and the elastomer (B) is set to 100 parts by mass, the content of the high-polarity monomer (A2) in the adhesive composition of the present embodiment is preferably 15 parts by mass or more, more preferably 18 parts by mass or more, still more preferably 20 parts by mass or more, and even still more preferably 22 parts by mass or more, and is preferably 40 parts by mass or less, more preferably 35 parts by mass or less, still more preferably 30 parts by mass or less, and even still more preferably 28 parts by mass or less.

### (Polyfunctional (meth)acrylate (A3))

The polymerizable monomer (A) can further include a polyfunctional (meth)acrylate (A3).

The polyfunctional (meth)acrylate (A3) refers to a compound having two or more carbon-carbon double bonds such as a (meth)acryloyl group. However, those corresponding to the high-polarity monomer (A2) are excluded from the polyfunctional (meth)acrylate (A3).

The polyfunctional (meth)acrylate (A3) preferably includes 2 or more and 6 or less (meth)acryloyl groups, more preferably includes 2 or more and 4 or less (meth)acryloyl groups, still more preferably includes 2 or more and 3 or less (meth)acryloyl groups, and even still more preferably includes 2 (meth)acryloyl groups.

The polyfunctional (meth)acrylate (A3) preferably includes one or two or more selected from the group consisting of a polyfunctional (meth)acrylate having an alicyclic structure, a polyfunctional (meth)acrylate having an aromatic ring structure, and a polyfunctional (meth)acrylate having an aliphatic chain structure.

Examples of the polyfunctional (meth)acrylate having an alicyclic structure include one or two or more selected from the group consisting of dicyclopentanyl di(meth)acrylate, 1,3-adamantanedimethanol di(meth)acrylate, tricyclodecanedimethanol di(meth)acrylate, dimethylol-tricyclodecan di(meth)acrylate, and dimethylol-cyclohexane di(meth)acrylate.

Examples of the polyfunctional (meth)acrylate having an aromatic ring structure include one or two or more selected from the group consisting of 2,2-bis(4-(meth)acryloxydiethoxyphenyl)propane, 2,2-bis(4-(meth)acryloxylpropoxyphenyl)propane, 2,2-bis(4-(meth)acryloxytetraethoxyphenyl)propane, ethylene oxide-added bisphenol A di(meth)acrylate (EO-formed BPA di(meth)acrylate), ethylene oxide-added bisphenol F di(meth)acrylate, propylene oxide-added bisphenol A di(meth)acrylate, and propylene oxide-added bisphenol F di(meth)acrylate.

Examples of the polyfunctional (meth)acrylate having an aliphatic chain structure include one or two or more selected from the group consisting of 1,3-butanediol di(meth)acrylate, 1,4-butanediol di(meth)acrylate, 1,6-hexanediol di(meth)acrylate, 1,9-nonanediol di(meth)acrylate, 1,10-decanediol di(meth)acrylate, neopentyl glycol di(meth)acrylate, neopentyl glycol-modified trimethylolpropane di(meth)acrylate, stearic acid-modified pentaerythritol di(meth)acrylate, tripropylene glycol di(meth)acrylate, isocyanuric acid-ethylene oxide-modified di(meth)acrylate, isocyanuric acid-ethylene oxide-modified tri(meth)acrylate, pentaerythritol tri(meth)acrylate, trimethylolpropane tri(meth)acrylate, tris[(meth)acryloyloxyethyl] isocyanurate, ditrimethylolpropane tetra(meth)acrylate, dimethylolpropane tetra(meth)acrylate, pentaerythritol tetra(meth)acrylate, pentaerythritol ethoxy tetra(meth)acrylate, dipentaerythritol penta(meth)acrylate, and dipentaerythritol hexa(meth)acrylate.

The polyfunctional (meth)acrylate (A3) more preferably includes one or two or more selected from the group consisting of dicyclopentanyl di(meth)acrylate, ethylene oxide-added bisphenol A di(meth)acrylate, dipentaerythritol penta(meth)acrylate, and dipentaerythritol hexa(meth)acrylate, and still more preferably includes dicyclopentanyl di(meth)acrylate.

In a case where the total content of the polymerizable monomer (A) and the elastomer (B) is 100 parts by mass, the content of the polyfunctional (meth)acrylate (A3) in the adhesive composition of the present embodiment is preferably 1 part by mass or more, more preferably 2 parts by mass or more, still more preferably 3 parts by mass or more, and even still more preferably 5 parts by mass or more, and is preferably 30 parts by mass or less, more preferably 25 parts by mass or less, still more preferably 20 parts by mass or less, even still more preferably 18 parts by mass or less, and even still more preferably 16 parts by mass or less.

In the adhesive composition of the present embodiment, in a case where the total content of the polymerizable monomer (A) and the elastomer (B) is set to 100 parts by mass, the content of the polymerizable monomer (A) is preferably 30 parts by mass or more, more preferably 35 parts by mass or more, still more preferably 38 parts by mass or more, and even still more preferably 40 parts by mass or more, and is preferably 80 parts by mass or less, more preferably 70 parts by mass or less, still more preferably 65 parts by mass or less, and even still more preferably 60 parts by mass or less.

### <Elastomer (B)>

The adhesive composition according to the present embodiment contains an elastomer (B).

The elastomer (B) preferably has a soft segment unit. The soft segment unit preferably includes one or two or more selected from the group consisting of a diene structure, an ethylene structure, a propylene structure, an isoprene structure, a urethane structure, an ethylene glycol structure, a propylene glycol structure, a silicone structure, and a chloroprene structure, and more preferably includes a diene structure such as a butadiene structure.

The elastomer (B) may have a hard segment in addition to the soft segment unit. The "soft segment" represents a flexible portion exhibiting rubber elasticity. The "hard segment" represents a molecular confinement portion that serves as a crosslinking point of the crosslinked rubber that prevents plastic deformation.

The content of the soft segment unit in the elastomer (B) is preferably 15% by mass or more and 90% by mass or less, and more preferably 25% by mass or more and 85% by mass or less in the entire elastomer of the present embodiment.

The elastomer (B) preferably includes one or two or more selected from the group consisting of a (meth)acrylonitrile-butadiene rubber, a methyl (meth)acrylate-butadiene-styrene rubber, and a methyl (meth)acrylate-butadiene-(meth)acrylonitrile-styrene rubber, more preferably includes one or two selected from the group consisting of a (meth)acrylonitrile-butadiene rubber and a methyl (meth)acrylate-butadiene-(meth)acrylonitrile-styrene rubber, and still more preferably includes both a (meth)acrylonitrile-butadiene rubber and a methyl (meth)acrylate-butadiene-(meth)acrylonitrile-styrene rubber.

The adhesive composition according to the present embodiment may contain only one elastomer or may contain two or more elastomers. For example, one or two kinds selected from the group consisting of the methyl (meth)acrylate-butadienestyrene rubber and the methyl (meth)acrylate-butadiene-(meth)acrylonitrile-styrene rubber, and the (meth)acrylonitrile-butadiene rubber may be used in combination. In a case of being used in combination, the mixing ratio is preferably 0.5:9.5 to 9.5:0.5, more preferably 0.8:9.2 to 9.2:0.8, and still more preferably 1.0:9.0 to 9.0:1.0, in terms of mass ratio.

In a case where the total content of the polymerizable monomer (A) and the elastomer (B) is set to 100 parts by mass, the content of the elastomer (B) in the adhesive composition of the present embodiment is preferably 20 parts by mass or more, more preferably 30 parts by mass or more, still more preferably 35 parts by mass or more, and even still more preferably 40 parts by mass or more, and is preferably 70 parts by mass or less, more preferably 65 parts by mass or less, still more preferably 62 parts by mass or less, and even still more preferably 60 parts by mass or less.

### <Polymerization Initiator (C)>

The adhesive composition according to the present embodiment preferably contains a polymerization initiator (C). The carbon-carbon double bond of the polymerizable monomer (A) is polymerized by the polymerization initiator (C), and thus the adhesiveness can be improved.

The polymerization initiator (C) preferably includes a thermal radical polymerization initiator. From the viewpoint of further improving the reactivity, the thermal radical polymerization initiator preferably includes an organic peroxide, more preferably includes one or two or more selected from the group consisting of cumene hydroperoxide, para-menthane hydroperoxide, tertiary butyl hydroperoxide, diisopropylbenzene dihydroperoxide, methyl ethyl ketone peroxide, and tertiary butyl peroxybenzoate, and still more preferably includes cumene hydroperoxide.

In a case where the total content of the polymerizable monomer (A) and the elastomer (B) is set to 100 parts by mass, the content of the polymerization initiator (C) in the adhesive composition of the present embodiment is preferably 0.1 parts by mass or more, more preferably 0.5 parts by mass or more, still more preferably 1.0 parts by mass or more, and even still more preferably 1.5 parts by mass or more, and is preferably 20.0 parts by mass or less, more preferably 15.0 parts by mass or less, still more preferably 12.0 parts by mass or less, even still more preferably 10.0 parts by mass or less, even still more preferably 8.0 parts by mass or less, even still more preferably 6.0 parts by mass or less, even still more preferably 4.0 parts by mass or less, and even still more preferably 3.0 parts by mass or less.

### <Reducing Agent (D)>

The adhesive composition according to the present embodiment preferably contains a reducing agent (D).

In the adhesive composition according to the present embodiment, the curing properties can be further improved by using the polymerization initiator (C) and the reducing agent (D) in combination.

The reducing agent (D) may be any reducing agent that reacts with the polymerization initiator (C) to generate a radical.

The reducing agent (D) preferably includes one or two or more selected from the group consisting of a tertiary amine, a thiourea derivative, and a transition metal salt, and more preferably includes a transition metal salt.

Examples of the tertiary amine include one or two or more selected from the group consisting of triethylamine, tripropylamine, tributylamine, and N,N-dimethylparatoluidine.

Examples of the thiourea derivative include one or two or more selected from the group consisting of 2-mercaptobenzimidazole, methylthiourea, dibutylthiourea, ethylene thiourea, acetyl-2-thiourea, benzoylthiourea, N,N-diphenylthiourea, N,N-diethylthiourea, N,N-dibutylthiourea, and tetramethylthiourea.

Examples of the transition metal salt include one or two or more selected from the group consisting of cobalt naphthenate, copper naphthenate, and vanadyl acetylacetonate. The transition metal salt more preferably includes vanadyl acetylacetonate.

In a case where the total content of the polymerizable monomer (A) and the elastomer (B) is set to 100 parts by mass, the content of the reducing agent (D) in the adhesive composition of the present embodiment is preferably 0.01 parts by mass or more, more preferably 0.05 parts by mass or more, still more preferably 0.10 parts by mass or more, even still more preferably 0.15 parts by mass or more, and even further still more preferably 0.20 parts by mass or more, and is preferably 10.0 parts by mass or less, more preferably 5.0 parts by mass or less, still more preferably 3.0 parts by mass or less, even still more preferably 2.0 parts by mass or less, even further still more preferably 1.0 parts by mass or less, and even further still even more preferably 0.50 parts by mass or less.

### <Other Components>

The adhesive composition according to the present embodiment may or may not include other components in addition to the above-described components.

### (Paraffin)

The adhesive composition according to the present embodiment may contain a paraffin. As the paraffin, for example, various paraffin can be used in order to quickly cure a portion in contact with air. Examples of the paraffin include one or two or more selected from the group consisting of paraffin wax, microcrystalline wax, carnauba wax, beeswax, lanolin, whale wax, ceresin, and candelilla wax.

In a case where the adhesive composition according to the present embodiment contains paraffin, it may contain only one paraffin or may contain two or more kinds of paraffin.

In a case where the adhesive composition according to the present embodiment includes paraffin, from the viewpoint of further improving the curability, the content of paraffin in the adhesive composition according to the present embodiment is preferably 0.01 parts by mass or more and 3 parts by mass or less, and more preferably 0.1 parts by mass or more and 2 parts by mass or less, in a case where the total content of the polymerizable monomer (A) and the elastomer (B) is set to 100 parts by mass.

### (Stabilizer)

From the viewpoint of further improving the storage stability, the adhesive composition according to the present embodiment may contain various stabilizers. Examples of the type of stabilizer include (i) a phenol-based antioxidant (for example, 2,2'-methylenebis(4-methyl-6-t-butylphenol) and the like), (ii) a quinone-based compound (for example, p-benzoquinone, hydroquinone monomethyl ether, and the like), (iii) a compound known as a polymerization inhibitor (for example, an amine-based polymerization inhibitor such as phenothiazine, citric acid, and the like), and (iv) a stable radical type compound having a stable radical.

In a case where the adhesive composition of the present embodiment includes a stabilizer, from the viewpoint of further improving the storage stability while suppressing a decrease in performance as an adhesive composition, the content of the stabilizer in the adhesive composition of the present embodiment is preferably 0.001 parts by mass or more, more preferably 0.005 parts by mass or more, still more preferably 0.01 parts by mass or more, even still more preferably 0.05 parts by mass or more, and even still more preferably 0.10 parts by mass or more, and is preferably 5.0 parts by mass or less, more preferably 3.0 parts by mass or less, still more preferably 2.0 parts by mass or less, even still more preferably 1.5 parts by mass or less, and even still more preferably 1.0 parts by mass or less, in a case where the total content of the polymerizable monomer (A) and the elastomer (B) is 100 parts by mass.

### <Properties of Adhesive Composition>

From the viewpoint of further improving the heat cycle resistance properties, the breaking elongation of the 1BA type dumbbell test piece according to Appendix A of JIS K 7161-2:2014, which is obtained by curing the adhesive composition according to the present embodiment at 23°C for 24 hours, measured under the condition of 23°C and a tensile rate of 10 mm/min according to JIS K 7161-2:2014 is preferably 30% or more, more preferably 35% or more, still more preferably 38% or more, even still more preferably 40% or more, even still more preferably 45% or more, and even still more preferably 48% or more, and is preferably 100% or less.

It is considered that the fact that the breaking elongation of the cured product of the adhesive composition is appropriately large means that the cured product of the adhesive composition fully relieves stress generated in a heat cycle test or the like. In particular, in the adhesion between different members having different thermal expansion coefficients, such as the iron core of the motor and the magnet, it is considered that effective stress relaxation is performed because the breaking elongation of the cured product of the adhesive composition is appropriately large.

The breaking elongation of the adhesive composition according to the present embodiment can be adjusted, for example, by adjusting the type and the content proportion of each component contained in the adhesive composition according to the present embodiment, the order of mixing the components, the mixing method, and the like.

In a case where a storage elastic modulus at 23°C in a case where a cured product obtained by curing the adhesive composition of the present embodiment at 23°C for 24 hours is measured in a tensile mode at a frequency of 1 Hz, a measurement temperature range of 0°C to 250°C, a temperature rising rate of 5°C/min using a dynamic viscoelasticity measuring device, is defined as E'₂₃, E'₂₃ is preferably 300 MPa or more, more preferably 400 MPa or more, still more preferably 500 MPa or more, even still more preferably 750 MPa or more, and even still more preferably 1000 MPa or more, and is preferably 5000 MPa or less, more preferably 4000 MPa or less, still more preferably 3000 MPa or less, and even still more preferably 2500 MPa or less, from the viewpoint of further improving the performance balance of the heat resistance fatigue properties and the heat cycle resistance properties.

The storage elastic modulus E'₂₃ of the cured product of the adhesive composition according to the present embodiment at 23°C can be adjusted, for example, by adjusting the type and the content proportion of each component contained in the adhesive composition according to the present embodiment, the mixing order of the components, the mixing method, and the like.

In a case where a storage elastic modulus at 80°C in a case where a cured product obtained by curing the adhesive composition of the present embodiment at 23°C for 24 hours is measured in a tensile mode at a frequency of 1 Hz, a measurement temperature range of 0°C to 250°C, a temperature rising rate of 5°C/min using a dynamic viscoelasticity measuring device is defined as E'₈₀, E'₈₀ is preferably 150 MPa or more, more preferably 170 MPa or more, still more preferably 200 MPa or more, even still more preferably 250 MPa or more, even further still more preferably 300 MPa or more, and even further still more preferably 330 MPa or more, and is preferably 2000 MPa or less, more preferably 1500 MPa or less, still more preferably 1000 MPa or less, and even still more preferably 850 MPa or less, from the viewpoint of further improving the performance balance of the heat resistance fatigue properties and the heat cycle resistance properties.

The storage elastic modulus E'₈₀ of the cured product of the adhesive composition according to the present embodiment at 80°C can be adjusted, for example, by adjusting the type and the content proportion of each component contained in the adhesive composition according to the present embodiment, the mixing order of the components, the mixing method, and the like.

### <One-agent Type/Two-agent Type>

The adhesive composition according to the present embodiment may be a one-agent type or a two-agent type (a form in which two agents filled in separate containers are mixed immediately before use).

In the case of the two-agent type, it is preferable that the polymerization initiator (C) is contained in the first agent and the reducing agent (D) is contained in the second agent.

In a case where the adhesive composition according to the present embodiment is a two-agent type, it is preferable to adjust the amounts of the respective components in the first agent and the second agent such that the adhesive composition after mixing the first agent and the second agent contains the respective components in a suitable content range of the respective components described above. In addition, various properties of the adhesive composition described in the present specification are related to the adhesive composition after mixing the first agent and the second agent.

### <Method for Producing Adhesive Composition>

In the production of the adhesive composition according to the present embodiment, it is preferable to appropriately adjust the mixing order, the mixing method, and the like of the respective components, instead of simply mixing the respective components.

In the production of the adhesive composition according to the present embodiment, it is particularly preferable that the polymerizable monomer (A) and the elastomer (B) are sufficiently mixed. Therefore, as shown in Examples described later, it is preferable that (i) first, at least a part of the polymerizable monomer (A) and at least a part of the elastomer (B) are sufficiently mixed uniformly at 50°C to 80°C to form a mixture, and (ii) then, other components are added to the mixture and stirred. In this manner, it is considered that the polymerizable monomer (A) and the elastomer (B) are sufficiently mixed with each other. The adhesive composition produced in this manner tends to easily satisfy, for example, the above-described properties of the adhesive composition (breaking elongation, storage elastic modulus of the cured product, and the like) as compared with the adhesive composition obtained by another production method.

### <Uses>

The adhesive composition according to the present embodiment can be suitably used as an automobile adhesive used for manufacturing an automobile, can be more suitably used as a motor adhesive, and can be even more suitably used as an adhesive for fixing a magnet and a rotor or a magnet and a stator in the motor.

### <Article>

The article of the present embodiment includes a cured product formed out of the adhesive composition of the present embodiment.

An article including a cured product of the adhesive composition can be obtained by applying the adhesive composition of the present embodiment to an article and curing the adhesive composition.

The adhesive composition according to the present embodiment is preferably capable of curing without heating (at room temperature) to bond an article (particularly, in a case of containing a polymerization initiator and a reducing agent). Of course, heating in a case of adhering the article is not excluded.

### <Motor>

The motor according to the present embodiment includes a cured product formed out of the adhesive composition according to the present embodiment.

The motor of the present embodiment includes, for example, a magnet, a rotor, and a stator, and includes a cured product formed out of the adhesive composition of the present embodiment at least between the magnet and the rotor or between the magnet and the stator. In this case, it is preferable that at least one of a space between the magnet and the rotor or a space between the magnet and the stator in the motor is fixed by a cured product formed out of the adhesive composition according to the present embodiment.

Examples of a method of fixing the magnet and the rotor include a method of fixing the magnet in the slot of the rotor. In addition, examples of a method of fixing the magnet and the stator include a method of fixing the magnet and the yoke. Examples of the magnet include a ferrite magnet and a permanent magnet. Examples of the permanent magnet include a neodymium magnet.

In the present specification, the "adhesive composition" has been mainly described. However, the adhesive composition described in the present specification can also be used in fields other than the adhesive, such as a coating agent and an injection agent. In other words, the adhesive composition described in the present specification can also be used as a composition of which the use application is not limited, a curable composition, and a resin composition. The composition according to the present embodiment can be used, for example, as a so-called adhesive, a sealing agent, a photosensitive resin layer, an insulating resin layer, a thermally conductive resin layer, a coating material, or the like.

Although the embodiments of the present invention have been described above, these are examples of the present invention, and various configurations other than those described above can be adopted. In addition, the present invention is not limited to the embodiments described above and modifications, improvements, and the like are included in the present invention in a range in which it is possible to achieve the object of the present invention.

### Examples

Hereinafter, the present invention will be described in more detail with reference to Examples, but the present invention is not limited to Examples.

### <Examples 1 to 4 and Comparative Examples 1 to 4>

The first agent and the second agent were prepared by sufficiently mixing the respective components in the proportions (unit: part by mass) shown in Table 1 with a stirrer equipped with a stirring blade. Next, the first agent and the second agent were mixed in equal amounts to prepare an adhesive composition. The following evaluations were carried out using the obtained adhesive composition. The obtained results are shown in Table 1. The unit of the proportion of each component in Table 1 is parts by mass.

Here, in the preparation of the first agent and the second agent, the polymerizable monomer (A) and the elastomer (B) were sufficiently mixed uniformly at 50°C to 80°C to prepare a mixture, and then other components were added to the mixture and stirred, and then the mixture was subjected to a defoaming treatment to prepare the first agent and the second agent.

Information regarding a part of the items described in Table 1 will be additionally described below.
· BL-20: methyl methacrylate-butadiene/acrylonitrile-styrene rubber (methyl methacrylate content: 15% by mass, butadiene content: 46% by mass, acrylonitrile content: 3% by mass, styrene content: 36% by mass, soft segment unit content: 46% by mass)
· 1300X33VTBNX LC: acrylonitrile-butadiene rubber having methacryloyl groups at both terminals (acrylonitrile content: 18% by mass, content of soft segment unit: 82% by mass)
· N250SL: acrylonitrile-butadiene rubber (acrylonitrile content: 19.5% by mass, content of soft segment unit: 81% by mass)
· DCPD type methacrylate: dicyclopentanyl methacrylate
SIPOMER PAM 4000: phosphoric acid ester of 2-hydroxyethyl methacrylate
· BPA diglycidyl ether acrylic acid adduct: bisphenol A diglycidyl ether acrylic acid adduct
· DCPD type dimethacrylate: dicyclopentanyl dimethacrylate

### <Evaluation>

In the following measurements and evaluations, all the measurements and evaluations were performed three times, and the average of the obtained three numerical values was adopted as the result.

### [Dynamic Viscoelasticity (DMA) Measurement]

First, a cured product (test piece) of the adhesive composition for dynamic viscoelasticity measurement was produced. Specifically, a test piece was prepared as described in (1) to (3) below.
(1) First, a 0.5 mm thick silicone sheet having a hole of 5 × 40 mm was placed on a PET film. An adhesive composition was applied to the portion having holes to form a coating film.
(2) Another PET film was bonded on the coating film. Then, both surfaces were sandwiched between glass plates having a thickness of 1 cm and pressed by putting a weight thereon. In this state, aging was carried out for 24 hours in a room with a temperature of 23°C and a relative humidity of 50 RH%. Thereafter, the pressure was released, and the PET film was peeled off. In this manner, a sheet-like cured product was obtained. Here, the film thickness was adjusted to about 500 µm depending on the thickness of the silicone sheet.
(3) The sheet-shaped cured product was cut to obtain a strip-shaped test piece of 0.5 × 5 × 40 mm.

Using a dynamic viscoelasticity measuring device (DMS7100, manufactured by SII NanoTechnology Inc.), the dynamic viscoelastic properties of the obtained test piece were measured, and data were obtained under the condition of frequency: 1.0 Hz, mode: tensile mode, measurement temperature range: 0°C to 250°C, and temperature rising rate: 5°C/min. Based on the obtained data, the storage elastic moduli (E'₂₃, E'₈₀, and E'₁₅₅) at 23°C, 80°C, and 155°C were determined from the temperature-loss tangent (tan δ) curve.

### [Breaking Elongation]

The measurement of the breaking elongation was performed in accordance with the test method of "Plastics - Determination of tensile properties" of JIS K7161-1:2014 and K7161-2:2014.

The test piece was cured by allowing the adhesive composition to stand in an environment of 23°C and a relative humidity of 50% for 24 hours, thereby producing a test piece having a 1BA dumbbell shape (1BA type dumbbell test piece) specified in Appendix A of JIS K 7161-2:2014. Next, the breaking elongation was measured by subjecting the obtained 1BA type dumbbell test piece to a tensile test under a condition of 23°C at a tensile rate of 10 mm/min. An "INSTRON 3365" (manufactured by Instron Corporation) was used as a tensile tester.

### [Heat Resistance Fatigue Properties]

An adhesive composition (a composition after mixing the two agents in the case of a two-agent type) was applied to one surface of one test piece (steel plate cold commercial of 25 mm × 100 mm × 1.6 mm in thickness (JIS G 3141 SPCC-SD, manufactured by Engineering Test Service Co., Ltd.), which had been subjected to an acetone degreasing treatment) to form a film, and the other test piece (steel plate cold commercial of 25 mm × 100 mm × 1.6 mm in thickness (JIS G 3141 SPCC-SD, manufactured by Engineering Test Service Co., Ltd.), which had been subjected to an acetone degreasing treatment) was immediately overlapped and bonded to the surface of the film. Thereafter, aging was carried out at room temperature (23°C) for 24 hours. In this manner, a test piece was obtained. Here, a polyethylene filler (manufactured by Prime Polymer Co., Ltd., product name: HIZEX 2100JPD) having a particle diameter of 100 µm was added to the adhesive composition, and the film thickness of the adhesive composition was adjusted to 100 µm (= 0.1 mm) by the action of the polyethylene filler (spacer for adjusting film thickness). The amount of the polyethylene filler used is 0.5 parts by mass with respect to 100 parts by mass of the polymerizable monomer (A).

Next, using the obtained test piece, a tensile shear adhesion test was performed in an environment of a temperature of 155°C and under a condition of a tensile rate of 10 mm/min using a universal testing machine Model 5967 manufactured by Instron Corporation, and a tensile shear adhesion strength F_{ref(155)} was measured.

In addition, using a fatigue tester, the obtained test piece was repeatedly loaded in an environment of 155°C, and the number of cycles at which destruction occurred was measured. In addition, by performing a plurality of tests with different magnitudes of loads and examining the number of break cycles, the strength F_{EOL(155)} at the expected design life was obtained from the approximate expression. Then, the heat resistance fatigue properties were evaluated by 100 × F_{EOL (155)}/F_{Ref (155)}. A case where 100 × F_{EOL (155)}/F_{Ref (155)} was 10% or more was evaluated as A (excellent), a case where 100 × F_{EOL (155)}/F_{Ref (155)} was 5% or more and less than 10% was evaluated as B (pass), and a case where 100 × F_{EOL (155)}/F_{Ref (155)} was less than 5% was evaluated as C (fail).

The tensile shear adhesion strength was measured in accordance with JIS K 6850: 1999, Adhesives-Determination of tensile lap shear strength of rigid-to-rigid bonded assemblies.

### [Heat Cycle Resistance Properties]

First, using the test piece produced in the section of [Heat Resistance Fatigue Properties], a tensile shear adhesion test was performed in an environment of a temperature of 23°C, a relative humidity of 50%, and under a condition of a tensile rate of 10 mm/min using a universal testing machine Model 5967 manufactured by Instron Corporation, and a tensile shear adhesion strength F_{Ref(23)} was measured.

In addition, a heat cycle test of 300 cycles was performed on the test piece produced in [Heat Resistance Fatigue Properties] described above, in which a cycle of "treatment in an atmosphere of -10°C for 30 minutes, followed by treatment at room temperature for 5 minutes, followed by treatment at 150°C for 30 minutes, and further treatment at room temperature for 5 minutes" was set as one cycle.

Next, using the test piece after the heat cycle test, a tensile shear adhesion test was performed in an environment of a temperature of 23°C, a relative humidity of 50% and under a condition of a tensile rate of 10 mm/min using a universal testing machine Model 5967 manufactured by Instron Corporation, and a tensile shear adhesion strength F_{after} was measured. Then, the heat cycle resistance properties were evaluated by 100 × F_{after}/F_{Ref(23)}. A case where 100 × F_{after}/F_{Ref(23)} was 40% or more was evaluated as A (excellent), a case where 100 × F_{after}/F_{Ref(23)} was 20% or more and less than 40% was evaluated as B (pass), and a case where 100 × F_{after}/F_{Ref(23)} was less than 20% was evaluated as C (fail).

Table 1 shows the composition of the adhesive composition and the measurement and evaluation results.

In Table 1, the unit of the amount of each component of the adhesive composition is part by mass.

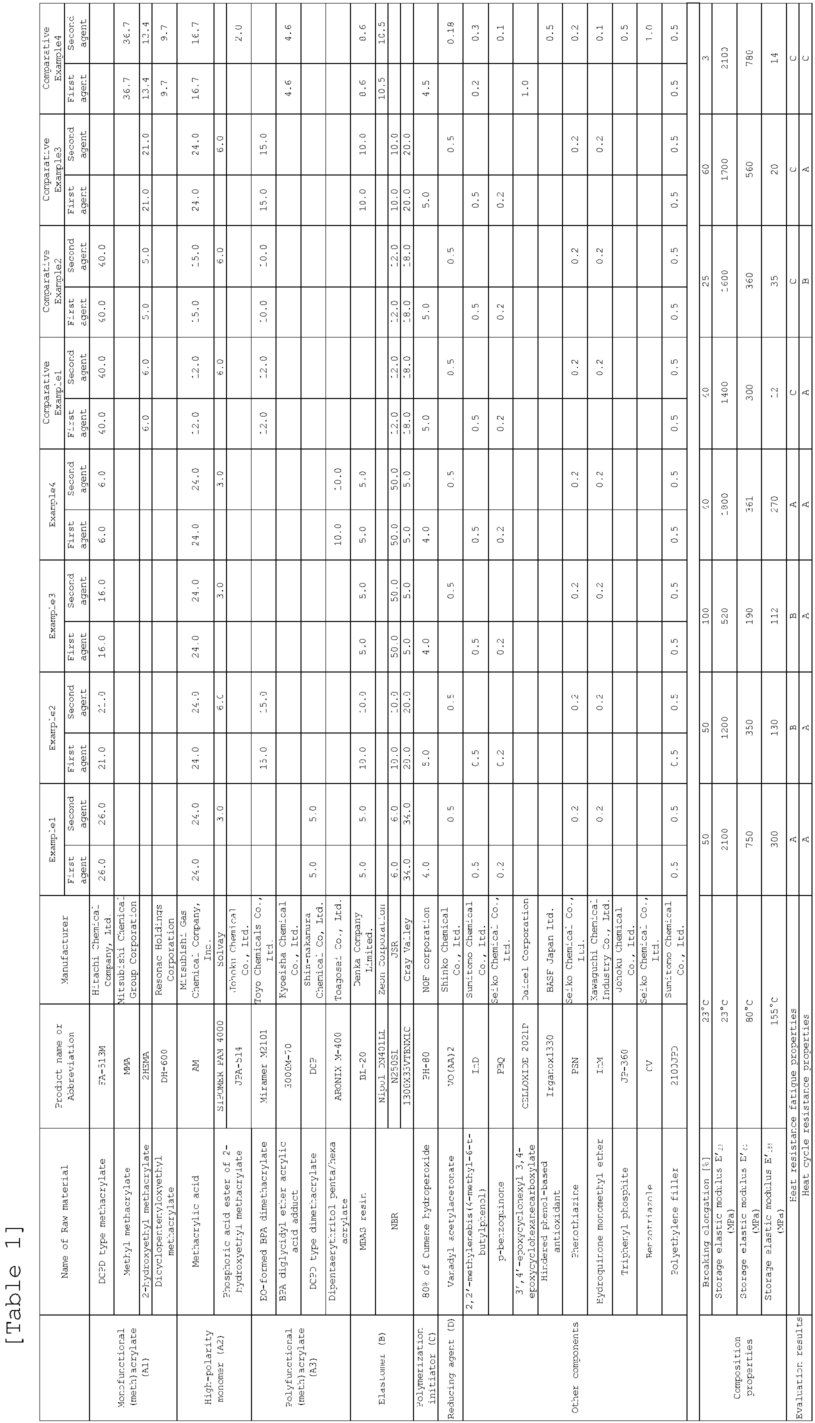

In the adhesive compositions of Examples 1 to 4 in which the storage elastic modulus E'₁₅₅ at 155°C was 80 MPa or more, the performance balance of the heat resistance fatigue properties and the heat cycle resistance properties was improved as compared with the adhesive compositions of Comparative Examples 1 to 4 in which the storage elastic modulus E'₁₅₅ at 155°C was less than 80 MPa.

This application claims priority based on Japanese Patent Application No. 2023-007241 filed on January 20, 2023, the entire disclosure of which is incorporated herein.

## Claims

1. A composition comprising: a polymerizable monomer (A); and an elastomer (B),
wherein the polymerizable monomer (A) includes a monofunctional (meth)acrylate (A1) and a high-polarity monomer (A2), and
in a case where a storage elastic modulus at 155°C, in a case where a cured product obtained by curing the composition at 23°C for 24 hours is measured in a tensile mode at a frequency of 1 Hz, a measurement temperature range of 0°C to 250°C, and a temperature rising rate of 5°C/min using a dynamic viscoelasticity measuring device, is defined as E'₁₅₅, the E'₁₅₅ is 80 MPa or more.

2. The composition according to claim 1,
wherein a breaking elongation of a 1BA type dumbbell test piece according to Appendix A of JIS K 7161-2:2014, which is obtained by curing the composition at 23°C for 24 hours, is 30% or more, the breaking elongation being measured under a condition of 23°C and a tensile rate of 10 mm/min according to JIS K 7161-2:2014.

3. The composition according to claim 1 or 2,
wherein the monofunctional (meth)acrylate (A1) includes a tricyclic monofunctional (meth)acrylate in which three rings are alicyclic.

4. The composition according to claim 3,
wherein the tricyclic monofunctional (meth)acrylate includes one or more selected from the group consisting of a monofunctional (meth)acrylate having a structure including a dicyclopentane skeleton and a ring connected to the dicyclopentane skeleton, and a monofunctional (meth)acrylate having a dicyclopentadiene skeleton.

5. The composition according to claim 1 or 2,
wherein in a case where a total content of the polymerizable monomer (A) and the elastomer (B) is 100 parts by mass, a content of the monofunctional (meth)acrylate (A1) is 1 part by mass or more and 50 parts by mass or less.

6. The composition according to claim 1 or 2,
wherein the polymerizable monomer (A) further includes a polyfunctional (meth)acrylate (A3).

7. The composition according to claim 6,
wherein the polyfunctional (meth)acrylate (A3) includes one or two or more selected from the group consisting of a polyfunctional (meth)acrylate having an alicyclic structure, a polyfunctional (meth)acrylate having an aromatic ring structure, and a polyfunctional (meth)acrylate having an aliphatic chain structure.

8. The composition according to claim 6,
wherein the polyfunctional (meth)acrylate (A3) includes 2 or more and 6 or less (meth)acryloyl groups.

9. The composition according to claim 6,
wherein in a case where a total content of the polymerizable monomer (A) and the elastomer (B) is 100 parts by mass, a content of the polyfunctional (meth)acrylate (A3) is 1 part by mass or more and 30 parts by mass or less.

10. The composition according to claim 1 or 2,
wherein the high-polarity monomer (A2) includes (meth)acrylic acid.

11. The composition according to claim 1 or 2,
wherein in a case where a total content of the polymerizable monomer (A) and the elastomer (B) is 100 parts by mass, a content of the high-polarity monomer (A2) is 15 parts by mass or more and 40 parts by mass or less.

12. The composition according to claim 1 or 2,
wherein the elastomer (B) includes one or two or more selected from the group consisting of a (meth)acrylonitrile-butadiene rubber, a methyl (meth)acrylate-butadiene-styrene rubber, and a methyl (meth)acrylate-butadiene-(meth)acrylonitrile-styrene rubber.

13. The composition according to claim 1 or 2,
wherein in a case where a total content of the polymerizable monomer (A) and the elastomer (B) is 100 parts by mass, a content of the elastomer (B) is 20 parts by mass or more and 70 parts by mass or less.

14. The composition according to claim 1 or 2,
wherein in a case where a storage elastic modulus at 23°C, in a case where a cured product obtained by curing the composition at 23°C for 24 hours is measured in a tensile mode at a frequency of 1 Hz, a measurement temperature range of 0°C to 250°C, a temperature rising rate of 5°C/min using a dynamic viscoelasticity measuring device, is defined as E'₂₃, the E'₂₃ is 300 MPa or more.

15. The composition according to claim 1 or 2,
wherein, in a case where a storage elastic modulus at 80°C, in a case where a cured product obtained by curing the composition at 23°C for 24 hours is measured in a tensile mode at a frequency of 1 Hz, a measurement temperature range of 0°C to 250°C, a temperature rising rate of 5°C/min using a dynamic viscoelasticity measuring device, is defined as E'₈₀, the E'₈₀ is 150 MPa or more.

16. The composition according to claim 1 or 2,
wherein the composition is an adhesive composition.

17. The composition according to claim 1 or 2,
wherein the composition is used for a motor.

18. The composition according to claim 17,
wherein the composition is used for fixing a magnet and a rotor or a magnet and a stator in the motor.

19. An article comprising a cured product formed out of the composition according to claim 1 or 2.

20. A motor comprising a cured product formed out of the composition according to claim 1 or 2.
